# EUROPÄISCHE PATENTANMELDUNG

(11) **EP 2 362 533 A1**
(43) Veröffentlichungstag der Anmeldung: **31.08.2011**
(21) Anmeldenummer: 10154318.9
(22) Anmeldetag: 23.02.2010
(51) Int. Cl.: H02M 5/257, C01B 33/035

(54) **Stromversorgungsanordnung, insbesondere zur Versorgung eines Reaktors zur Herstellung von Polysilicium nach dem Siemens-Verfahren**

(71) Anmelder: AEG Power Solutions B.V., 1161 AH Zwanenburg (NL)
(72) Erfinder: Wallmeier, Peter, 59556 Lippstadt (DE); Paul, Wolfgang, 59581 Warstein-Belecke (DE)
(74) Vertreter: Graefe, Jörg

(57) **Zusammenfassung**

Die Erfindung betrifft eine Stromversorgungsanordnung, insbesondere zur Versorgung von Silicium-Dünnstäben in einem Reaktor zur Herstellung von Polysilicium nach dem Siemens-Verfahren,
- mit Eingängen (L1, L2, L3) zum Anschluss an ein dreiphasiges Versorgungsnetz,
- mit Ausgängen, die in drei Gruppen (A11-A13, A21 -A24, A31-A33) von Ausgängen zum Versorgen von an die Ausgänge anschließbaren Lasten, insbesondere der Silicium-Dünnstäbe gruppiert sind,
- mit drei Gruppen (S1, S2, S3) von Stellmitteln zum Einstellen einer an den Ausgängen anliegenden elektrischen Spannung und
- mit drei Gruppen (U1, U2, U3) von Umschaltmitteln zum Umschalten zwischen einer Parallelschaltung und einer Reihenschaltung der Ausgänge einer der Gruppen (A11-A13, A21-A24, A31-A33) von Ausgängen,
- wobei jede Gruppe (S1, S2, S3) von Stellmitteln wenigstens in einem Zustand der Stromversorgungsanordnung über eine Gruppe von Umschaltmitteln (U1, U2, U3) mit einer Gruppe ( A11-A13, A21-A24, A31-A33) von Ausgängen verbunden ist.

## Beschreibung

Die vorliegende Erfindung betrifft eine Stromversorgungsanordnung, insbesondere zur Versorgung von Silicium-Dünnstäben in einem Reaktor zur Herstellung von Polysilicium nach dem Siemens-Verfahren,
- mit Eingängen zum Anschluss an ein dreiphasiges Versorgungsnetz,
- mit drei Gruppen von Ausgängen zum Versorgen von an die Ausgänge anschließbaren Lasten, insbesondere der Silicium-Dünnstäbe,
- mit drei Gruppen von Stellmitteln zum Einstellen einer an den Ausgängen anliegenden elektrischen Spannung und
- mit drei Gruppen von Umschaltmitteln zum Umschalten zwischen einer Parallelschaltung und einer Reihenschaltung der Ausgänge einer der Gruppen von Ausgängen,
wobei jede Gruppe von Stellmitteln wenigsten in einem Zustand der Stromversorgungsanordnung über eine Gruppe von Umschaltmitteln mit einer Gruppe von Ausgängen verbunden ist.

Ein Ausgang bei einer derartigen Stromversorgungsanordnung ist ein Paar von elektrischen Anschlüssen, die zum Anschluss von einer oder mehrerer in Reihe geschalteter Lasten sind. Ist am Ausgang eine Last angeschlossen, kann in wenigstens einem Zustand der Stromversorgungsanordnung von dem einen Anschluss über die Last zum anderen Anschluss ein Strom fließen. Es kann aber auch Zustände der Stromversorgungsanordnung geben, in denen kein Strom von einem der Anschlüsse eines Ausgangs zu dem anderen Anschluss fließt. Ein Anschluss eines Ausgangs kann zugleich ein Anschluss wenigstens eines weiteren Ausgangs sein.

Sind mehrere Ausgänge in einem Zustand der Stromversorgungsanordnung parallel geschaltet, bedeutet das, dass die Ausgänge in diesem Zustand der Stromversorgungsanordnung innerhalb derselben an dieselbe Stromquelle angeschlossen sind. Sind an die parallel geschalteten Ausgänge Lasten angeschlossen, sind auch diese parallel geschaltet.

Sind mehrere Ausgänge dagegen in einem Zustand der Stromversorgungsanordnung in Reihe geschaltet, fällt in diesem Zustand über alle in Reihe geschalteten Ausgänge eine Spannung ab. Sind an die in Reihe geschalteten Ausgänge Lasten angeschlossen, fließt ein Strom von einem ersten Anschluss eines ersten Ausgangs der Reihenschaltung durch die Lasten zu einem zweiten Anschluss eines letzten Ausgangs der Reihenschaltung. Über die übrigen Anschlüsse der in Reihe geschalteten Ausgänge fließt kein Strom.

Die europäische Patentanmeldung EP 1 947 545 A2 offenbart in ihrer Fig. 2 eine Stromversorgungsanordnung zur Versorgung von Silicium-Dünnstäben in einem Reaktor zur Herstellung von Polysilicium nach dem Siemens-Verfahren. Silicium-Dünnstäbe werden zu Stabpaaren zusammengefasst und bilden die an die Stromversorgungsanordnung angeschlossenen Lasten.

Die Stromversorgungsanordnung hat drei Gruppen von Ausgängen, wobei die Ausgänge dieser drei Gruppen in Parallelschaltung oder Reihenschaltung geschaltet werden können. Sind die Ausgänge einer Gruppe von Ausgängen in Reihe geschaltet, sind die an die Ausgänge dieser Gruppe angeschlossen Stabpaare ebenfalls in Reihe geschaltet. Sind die Ausgänge dagegen parallel geschaltet, sind auch die Stabpaare parallel geschaltet. Neben diesen drei Gruppen von Ausgängen weist die Stromversorgungsanordnung einen weiteren Ausgang auf. Insgesamt kann mit einer Stromversorgungsanordnung gemäß der Fig. 2 der europäischen Patentanmeldung EP 1 947 545 A2 eine Anzahl von 18 Stabpaaren mit elektrischer Energie versorgt werden.

Die Stabpaare sind in dem Reaktor in drei konzentrischen Ringen angeordnet, wobei in einem inneren Ring drei Stabpaare, in einem mittleren Ring sechs Stabpaare und in einem äußeren Ring neun Stabpaare vorgesehen sind. Über jeden der drei Eingänge der dreiphasigen Stromversorgungsanordnung werden insgesamt sechs Stabpaare mit elektrischer Energie versorgt, was dadurch umgesetzt ist, dass die drei Stabpaare des inneren Ringes mit drei Stabpaaren des äußeren Ringes mit elektrischer Energie aus einer Phase versorgt werden. Das führt zu einer hohen Komplexität der Gruppe von Stellmitteln, an welche diese Stabpaare angeschlossen sind.

Der Erfindung lag die Aufgabe zugrunde, eine einfache Stromversorgungsanordnung der eingangs genannten Art zu schaffen, die zur Versorgung von Stabpaaren geeignet ist, die in zwei konzentrischen Ringen in einem Reaktor angeordnet sind. Die Stromversorgungsanordnung soll insbesondere auch zur Versorgung von 18 Stabpaaren geeignet und eingerichtet sein.

Diese Aufgabe wird erfindungsgemäß dadurch gelöst, dass alle Ausgänge in drei Gruppen von Ausgängen gruppiert sind.

Mit der erfindungsgemäßen Stromversorgungsanordnung können 18 Stabpaare in zwei konzentrischen Ringen in einem Reaktor mit elektrischer Energie versorgt werden. Die Aufteilung kann so erfolgen, dass eine erste Gruppe von Ausgängen zur Versorgung der Stabpaare des inneren Ringes vorgesehen ist, während die anderen zwei Gruppen zur Versorgung der Stabpaare des äußeren Ringes vorgesehen sind. Die Verwendung der erfindungsgemäßen Stromversorgungsanordnung ist aber nicht auf diesen Fall beschränkt. Eine erfindungsgemäße Stromversorgungsanordnung kann so ausgestaltet sein, dass jede Gruppe von Stellmitteln in wenigstens einem Zustand der Stromversorgungsanordnung über genau eine Gruppe von Umschaltmitteln mit genau einer Gruppe von Ausgängen verbunden ist. Vorzugsweise ist das im Zustand der Parallelschaltung der Ausgänge der Gruppe der Fall. Ebenso ist es möglich, dass jede Gruppe von Stellmitteln über vorzugsweise genau einen Transformator mit einem Eingang verbunden ist. Durch diese eindeutige Zuordnung der Gruppen von Stellmitteln, Umschaltmitteln und Ausgängen sowie der Transformatoren ist ein einfacher Aufbau einer Regelung zum Regeln der über die Ausgänge übertragenen Leistung möglich.

Die erfindungsgemäße Stromversorgungsanordnung kann wenigstens eine erste Gruppe von Ausgängen der Gruppen von Ausgängen aufweisen, bei der drei Ausgänge in Parallelschaltung oder in Reihenschaltung betrieben werden können. An jeden Ausgang können dann zwei in Reihe geschaltete Lasten angeschlossen werden. Über jede Last fällt dann die Hälfte der an dem Ausgang anliegenden Spannung ab. Vorzugsweise hat eine erfindungsgemäße Stromversorgungsanordnung genau eine erste Gruppe von Ausgängen. Erfindungsgemäß ist es auch möglich, dass alle drei Gruppen von Ausgängen drei Ausgänge aufweisen, die in Reihenschaltung oder in Parallelschaltung betrieben werden können.

Ferner kann eine erfindungsgemäße Stromversorgungsanordnung wenigstens eine zweite Gruppe von Ausgängen der Gruppen von Ausgängen aufweisen, bei der zwei Ausgänge in Parallelschaltung oder in Reihenschaltung betrieben werden können. An jeden Ausgang können dann drei Lasten angeschlossen werden. In Parallelschaltung der Ausgänge der zweiten Gruppen fällt dann ein Drittel der am Ausgang anliegenden Spannung ab. Vorzugsweise hat eine erfindungsgemäße Stromversorgungsanordnung genau zwei zweite Gruppen von Ausgängen. Erfindungsgemäß ist es auch möglich, dass alle drei Gruppen von Ausgängen zwei Ausgänge aufweisen, die in Reihenschaltung betrieben werden können.

Die Gruppen von Stellmitteln einer erfindungsgemäßen Stromversorgungsanordnung können eingangsseitige Anschlüsse aufweisen. Diese können mit je einer Anzapfung einer Sekundärseite des mit der Gruppe von Stellmitteln verbundenen Transformators verbunden sein. Über die Anzapfungen können eingangsseitig unterschiedliche Spannungen an die Gruppe von Stellmitteln angelegt werden.

Die Gruppen von Stellmitteln können einen ersten ausgangsseitigen Anschluss und einen zweiten ausgangsseitigen Anschluss aufweisen. Jeder ausgangsseitige Anschluss kann über einen Leistungssteller mit wenigsten zwei eingangseitigen Anschlüssen verbunden sein. Durch diese Art der Verbindung der ausgangsseitigen Anschlüsse kann eine Spannung an den ausgangsseitigen Anschlüssen der Gruppen von Stellmitteln auf zweierlei Art eingestellt werden. Eine erste Einstellung der Spannung in Stufen ist durch die Auswahl des eingangseitigen Anschlusses möglich, der über einen Leistungsteller mit dem ausgangseitigen Anschluss verbunden ist. Eine zweite vorzugsweise stufenlose Einstellung ist dann durch die Wahl eines Zündwinkels des Leistungsstellers möglich. Damit können an die ausgangsseitigen Anschlüsse jeder Gruppe von Stellmitteln durch eine Spannungsfolgesteuerung stufenlos einstellbare Spannungen angelegt werden.

Da der erste ausgangseitige Anschluss der Spannungsversorgung der Ausgänge im Fall der Parallelschaltung und der zweite ausgangseitige Anschluss der Spannungsversorgung der Ausgänge im Fall der Reihenschaltung der Ausgänge dient, kann die Spannung an den Ausgängen einer Gruppe von Ausgängen zusätzlich variiert werden. Während bei einer Parallelschaltung der Ausgänge an jedem Ausgang eine an ersten ausgangseitigen Anschlüssen der zugeordneten Gruppe von Stellmitteln anliegende maximale Spannung in voller Höhe bereitgestellt wird, beträgt die maximale Spannung an den Ausgängen einer Gruppe von Ausgängen im Fall der Reihenschaltung nur einen Bruchteil der am zweiten ausgangsseitigen Anschluss der zugeordneten Gruppe von Stellmitteln anliegenden Spannung. Der Bruchteil wird durch die Anzahl der in Reihe geschalteten Ausgänge der Gruppe bestimmt.

Bei einer erfindungsgemäßen Stromversorgungsanordnung kann jede Gruppe von Umschaltmitteln einen eingangsseitigen Anschluss aufweist. Der eingangsseitige Anschluss ist vorzugsweise mit dem ersten ausgangsseitigen Anschluss der zugeordneten Gruppe von Stellmitteln verbunden. Die Spannung an den eingangseitigen Anschlüssen der Gruppen von Umschaltmitteln kann dadurch stufenlos eingestellt werden.

Jede Gruppe von Umschaltmitteln kann ausgangseitige Anschlüsse aufweisen, die unmittelbar mit einem Rückleiteranschluss des zugeordneten Transformators verbunden sind oder innerhalb der Gruppe von Umschaltmitteln ggf. über steuerbare Schaltmittel mit dem ersten eingangsseitigen Anschluss oder einem Rückleiteranschluss des zugeordneten Transformators verbunden sind.

Eine erfindungsgemäße Stromversorgungsanordnung kann so ausgestaltet sein, dass die zweiten ausgangsseitigen Anschlüsse der Gruppen von Stellmitteln, die ausgangsseitigen Anschlüsse der Gruppen von Umschaltmitteln und Rückleiteranschlüssen der Transformatoren mit Anschlüssen der Ausgänge der zugeordneten Gruppen von Ausgängen verbunden sind.

In einer besonderen Ausführung der erfindungsgemäßen Stromversorgungsanordnung kann jeder zweite ausgangsseitige Anschluss einer Gruppe von Stellmitteln über einen Knoten in der zugeordneten Gruppe von Umschaltmitteln mit einem weiteren ausgangsseitigen Anschluss der zugeordneten Gruppen von Umschaltmitteln verbunden sein. Mit den ausgangsseitigen Anschlüssen der Gruppen von Umschaltmitteln und den Anschlüssen zu den Rückleitern kann der zweite ausgangsseitige Anschluss so mittelbar mit Anschlüssen der Ausgänge der zugeordneten Gruppe von Ausgängen verbunden sein.

Ein erfindungsgemäßer Reaktor zur Herstellung von Polysilicium nach dem Siemens-Verfahren weist eine erfindungsgemäße Stromversorgungsanordnung und in dem Reaktor angeordnete Silcium-Dünnstäbe auf, die an die Ausgänge der Stromversorgungsanordnung angeschlossen sind. An die Ausgänge der ersten Gruppe von Ausgängen können jeweils zwei in Reihe geschaltete, eine Last bildende Silicium-Dünnstabpaare angeschlossen sein und an die Ausgänge der zweiten Gruppen von Ausgängen können jeweils drei in Reihe geschaltete, eine Last bildende Silicium-Dünnstabpaare angeschlossen sein. Vorzugsweise weist die Stromversorgungsanordnung eine erste Gruppe von Ausgängen und zwei zweite Gruppen von Ausgängen auf. Die an die erste Gruppe von Ausgängen angeschlossenen Stabpaare können in einem inneren Ring und die an die zweiten Gruppen angeschlossenen Stabpaare können an einen zweiten Ring angeschlossen sein.

Ein solcher Reaktor kann folgendermaßen betrieben werden:
- in einem ersten Schritt werden die Ausgänge der ersten Gruppe von Ausgängen und die daran angeschlossenen Lasten in Parallelschaltung mit Spannung versorgt während an den Ausgängen der zweiten Gruppe von Ausgängen angeschlossenen Lasten keine Spannung anliegt und
- in einem späteren Schritt werden die Ausgänge der ersten Gruppe von Ausgängen und die daran angeschlossenen Lasten und die Ausgänge der zweiten Gruppen von Ausgängen und die daran angeschlossenen Lasten in Reihenschaltung mit Spannung versorgt.

Während des ersten Schrittes fließt ein Strom durch die an die Ausgänge der ersten Gruppe von Ausgängen angeschlossenen Lasten. Die Stabpaare erwärmen sich und verlieren bei Erreichen einer bekannten Temperatur einen erheblichen Teil des elektrischen Widerstands. Man bezeichnet dieses als Zünden der Stabpaare. Durch die weiter anliegende Spannung fließt weiter ein Strom durch die Stabpaare. An jedem Stabpaar fällt dabei die Hälfte der an dem zugeordneten Ausgang anliegenden Spannung ab

Die Erwärmung der an die Ausgänge der ersten Gruppe angeschlossenen Lasten strahlt auf die an die Ausgänge der zweiten Gruppen von Ausgängen angeschlossenen Lasten aus. Diese Stabpaare werden durch die Strahlungswärme vorgewärmt. In einem dem späteren Schritt vorhergehenden Schritt können die Ausgänge der zweiten Gruppen von Ausgängen und die daran angeschlossenen, vorgewärmten Lasten in Parallelschaltung mit Spannung versorgt werden. Da an jeden Ausgang der zweiten Gruppe drei Stabpaare angeschlossen sind, fällt über jedem Stabpaar ein Drittel der am Ausgang anliegenden Spannung ab. Dieses Drittel ist jedoch ausreichend, um die vorgewärmten Lasten weiter zu erhitzen und ebenfalls zu zünden. Die Ausgänge der ersten Gruppe von Ausgängen und die daran angeschlossenen Lasten können währenddessen weiter in Parallelschaltung mit Spannung versorgt werden. Ebenso ist es möglich, dass währenddessen die Ausgänge der ersten Gruppe von Ausgängen und die daran angeschlossen Lasten in Reihenschaltung mit Spannung versorgt werden.

Ferner ist es möglich, dass die Ausgänge der zweiten Gruppen von Ausgängen und die daran angeschlossen Lasten in Reihenschaltung mit Spannung versorgt werden, während die an die Ausgänge der ersten Gruppe angeschlossenen Lasten in Parallelschaltung mit Spannung versorgt werden.

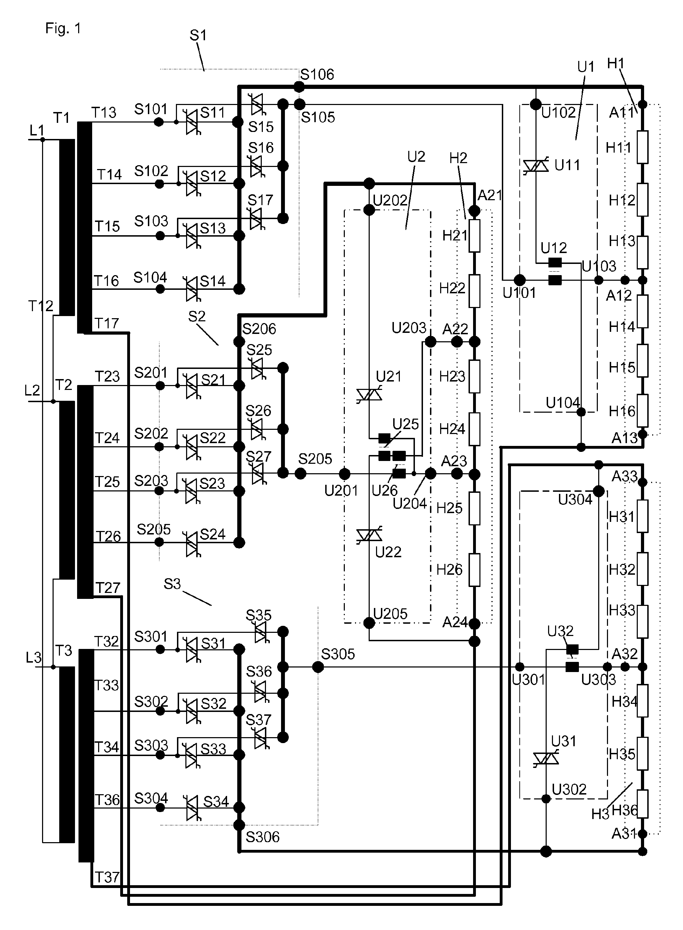

Weitere Merkmale und Vorteile der vorliegenden Erfindung werden deutlich anhand der nachfolgenden Beschreibung eines in der Zeichnung dargestellten Ausführungsbeispiels. Es zeigt
- Fig. 1: ein schematisches Schaltbild einer erfindungsgemäßen Stromversorgungsanordnung.

Die in der Figur 1 dargestellte Stromversorgungsanordnung weist drei Eingänge L1 , L2, L3 auf, an die drei Transformatoren T1, T2, T3, in Dreiecksschaltung angeschlossen sind. Die Sekundärseiten der drei Transformatoren T1, T2, T3 sind mit je einer Gruppe S1 , S2, S3 von Stellmitteln verbunden. An jede Gruppe S1 , S2, S3 von Stellmitteln ist eine Gruppe U1, U2, U3 von Umschaltmitteln angeschlossen. Ferner ist an jede Gruppe S1 , S2, S3 von Stellmitteln und an jede Gruppe U1, U2, U3 von Umschaltmitteln eine Gruppe von Ausgängen angeschlossen. An jede Gruppe von Ausgängen ist eine Gruppe H1, H2, H3 von Lasten angeschlossen.

Über die Transformatoren T1, T2, T3, die Gruppen S1 , S2, S3 von Stellmitteln, die Gruppen U1, U2, U3 von Umschaltmitteln und die Gruppen von Ausgängen wird beim Betrieb der Stromversorgungsanordnung ein Strom zur Versorgung der Lasten der Gruppen von Lasten geführt.

Die Transformatoren T1, T2, T3 und die Gruppen S1, S2, S3 von Stellmitteln sind gleich ausgeführt. Sie werden anhand des Transformators T1 und der daran angeschlossenen Gruppe S1 von Stellmitteln näher beschrieben.

Die Sekundärseite des Transformators T1 weist vier Anzapfungen T13, T14, T15, T16 auf. Diese Anzapfungen T13, T14, T15, T16 des Transformators T1 sind mit eingangsseitigen Anschlüssen S101 , S102, S103, S104 der Gruppe S1 von Stellmitteln verbunden. Innerhalb der Gruppe S1 von Stellmitteln sind die eingangsseitigen Anschlüsse S101 , S102, S103 jeweils über je einen Knoten mit je zwei Leistungsstellern S11, S15, S12, S16, S13, S17 verbunden, während der eingangsseitige Anschluss S104 mit einem Leistungssteller S14 verbunden ist. Die Leistungssteller S15, S16, S17 sind mit einer ersten Sammelschiene verbunden während die Leistungssteller S11, S12, S13, S14 mit einer zweiten Sammelschiene verbunden sind. Die erste Sammelschiene ist mit einem ersten ausgangsseitigen Anschluss S105 und die zweite Sammelschiene mit einem zweiten ausgangsseitigen Anschluss S106 der Gruppe S1 von Stellmitteln verbunden.

In gleicher Weise sind Anzapfungen T23, T24, T25, T26, T33, T34, T35, T36 der Transformatoren T2, T3 mit eingangseitigen Anschlüssen S201, S202, S203, S204, S301, S302, S303, S304 der Gruppe S2, S3 von Stellmitteln verbunden. Innerhalb dieser Gruppen S2, S3 sind auf gleiche Weise die eingangsseitigen Anschlüsse S201, S202, S203, S204, S301, S302, S303, S304 über Leistungssteller S21, S25, S22, S26, S23, S27, S24, S31, S35, S32, S36, S33, S37, S34 und einer ersten und einer zweiten Sammelschiene mit ersten ausgangsseitigen Anschlüssen S205, S305 und zweiten ausgangsseitigen Anschlüssen S206, S306 verbunden.

Der erste ausgangsseitige Anschluss S105 ist mit einem eingangsseitigem Anschluss U101 der zugeordneten Gruppe U1 von Umschaltmitteln verbunden, während der zweite ausgangsseitige Anschluss mit einem Anschluss A11 der ersten Gruppe A11 bis A13 von Ausgängen verbunden ist. In gleicher Weise sind die ersten ausgangsseitigen Anschlüsse S205, S305 der Gruppen S2, S3 mit eingangsseitigen Anschlüssen U201, U301 der zugeordneten Gruppe U2, U3 von Umschaltmitteln verbunden. Die zweiten ausgangsseitigen Anschlüsse S206, S306 der Gruppen S2, S3 sind mit Anschlüssen A21 , A31 der Gruppen A21 bis A24, A31 bis A33 von Ausgängen verbunden.

Die Gruppen von Ausgängen weisen neben den Anschlüssen A11, A21, A31 weitere Anschlüsse A12, A13, A22, A23, A24, A32, A33 auf. Jeder Anschluss ist zusammen mit einem anderen Anschluss der gleichen Gruppe zumindest Teil eines Ausgangs. Das Anschlusspaar A11 und A12 und das Anschlusspaar A12 und A13 bilden die Ausgänge der ersten Gruppe von Ausgängen. Das Anschlusspaar A21 und A22, das Anschlusspaar A22 und A23 und das Anschlusspaar A23 und A24 bilden die Ausgänge der zweiten Gruppe von Ausgängen. Das Anschlusspaar A31 und A32 und das Anschlusspaar A32 und A33 bilden die Ausgänge der dritten Gruppe von Ausgängen. Die erste und die dritte Gruppe von Ausgängen weisen zwei Ausgänge auf. Die zweite Gruppe umfasst drei Ausgänge.

Die Anschlüsse A13, A24, A33 sind über einen Rückleiter mit Anzapfungen T17, T27, T37 der zugeordneten Transformatoren T1, T2, T3 verbunden.

Im Falle einer Reihenschaltung der Ausgänge fällt zwischen dem Anschluss A11 und dem Anschluss A13, dem Anschluss A21 und dem Anschluss A24 sowie dem Anschluss A31 und dem Anschluss A33 die gesamte am zweiten ausgangseitigen Anschluss S106, S206, S306 der Gruppen S1, S2, S3 anliegenden Spannung ab. In diesem Fall darf an ersten ausgangsseitigen Anschlüssen S105, S205, S206 keine Spannung anliegen.

Während die Gruppen U1, U3 von Umschaltmitteln gleich ausgebildet sind, ist die Gruppe U2 auf andere Weise ausgeführt. Der Grund liegt darin, dass die Gruppen U1, U3 von Umschaltmitteln für die Parallelschaltung der zwei Ausgänge der ersten und dritten Gruppen vorgesehen sind, während die Gruppe U2 für die Parallelschaltung der drei Ausgänge der zweiten Gruppe geeignet und eingerichtet ist.

Die Gruppen U1, U2 von Umschaltmitteln weisen neben dem eingangsseitigen Anschlüssen U101, U301 Anschlüsse U102, U103, U104, U202, U203, U204 auf. Diese sind mit den Anschlüssen A11, A12, A13, A31, A32, A33 verbunden. Über die Anschlüsse U102, U103, U104, U202, U203, U204 können daher die durch die Anschlusspaare A11, A12; A12, A13 bzw. A31, A32; A32, A33 gebildeten Ausgänge der ersten und der dritten Gruppen von Ausgängen parallel mit Spannung versorgt werden.

Die Anschlüsse U103, U303 sind mit den Anschlüssen A12, A32 der Ausgänge und unter Zwischenschaltung von ersten Spulen von Koppelmitteln U12, U32 mit den eingangsseitigen Anschlüssen U101, U301 verbunden. Eine an den eingangsseitigen Anschlüssen U101, U301 anliegende Spannung liegt daher auch den Anschlüssen U103, U303 und an den Anschlüssen A12, A32 an.

Die Anschlüsse U102, U302 sind mit den Anschlüssen A11, A31 und unter Zwischenschaltung gesteuerter Schalter U11, U31 und von zweiten Spulen der Koppelmittel U12, U32 mit den Anschlüssen U104, U304 verbunden.

Die Anschlüsse U104, U304 sind ferner mit den Anschlüssen A13, A33 und mit den Rückleiteranschlüssen T17, T37 der Transformatoren T1, T3 verbunden.

Sofern die gesteuerten Schalter U11, U31 geschlossen sind, sind also die Anschlüsse U102, U302 sowie die Anschlüsse A11, A31 mit den Rückleiteranschlüssen T17, T37 der Transformatoren T1, T3 verbunden. Die durch die Anschlusspaare A11, A12; A12, A13 bzw. A31, A32; A32, A33 gebildeten Ausgänge der ersten und der dritten Gruppen von Ausgängen sind dann parallel geschaltet. An den zweiten ausgangsseitigen Anschlüssen S106, S306 dürfen keine Spannungen anliegen.

Die Koppelmittel U12, U32 sind Transformatoren deren erste Spule von Strömen zu den parallel geschalteten Ausgängen und deren zweite Spule von einem Strom von einem der Ausgänge durchflossen wird. Durch eine geeignete, dem Fachmann geläufige Auslegung des Transformators kann dafür Sorge getragen werden, dass die Summe der Ströme zu den parallel geschalteten Ausgängen doppelt so groß ist wie der Strom von dem einen Ausgang.

Die Gruppe U2 von Umschaltmitteln unterscheidet sich wegen der Möglichkeit die drei Ausgänge der zweiten Gruppe von Ausgängen parallel zu schalten, während durch die anderen Gruppen U1, U3 zwei Ausgänge parallel geschaltet werden können. Neben dem eingangsseitigen Anschluss U201 weist die Gruppe U2 Anschlüsse U202, U203, U204, U205 auf, die mit den Anschlüssen A21, A22, A23, A24 der Ausgänge der zweiten Gruppe verbunden sind. Die Anschlüsse U202, U204 und somit die Anschlüsse A21, A23 sind über ein gesteuertes Schaltmittel U21 mit dem eingangseitigen Anschluss U201 verbunden, wodurch bei geschlossenem Schaltmittel U21 an den Anschlüssen A21, A23 die gleiche Spannung anliegt wie am ersten ausgangseitigen Anschluss S205 der Gruppe S2 von Stellmitteln.

Der Anschluss U205 ist mit dem Anschluss A24 und mit einem Rückleiteranschluss T27 des Transformators T2 verbunden. Der Anschluss A24 hat also stets das Potential des Rückleiteranschlusses T27. Der Anschluss U203 ist mit dem Anschluss A22 und über ein gesteuertes Schaltmittel U22 mit dem Anschluss U205 und somit ebenfalls mit dem Rückleiteranschluss T27 verbunden. Ist das Schaltmittel U22 geschlossen, liegt auch der Anschluss A22 auf dem Potential des Rückleiteranschlusses T27.

Sollen die durch das Anschlusspaar A21, A22, das Anschlusspaar A23, A22 und das Anschlusspaar A23, A24 gebildeten Ausgänge der Gruppe A2 parallel geschaltet sein, sind die Schaltmittel U21, U22 geschlossen. Im Fall der Reihenschaltung der Ausgänge der Gruppe A2 sind die Schaltmittel geöffnet, so dass die am zweiten ausgangsseitigen Anschluss S206 anliegende Spannung über die Reihenschaltung der Ausgänge abfällt.

Auch die Gruppe U2 von Umschaltmitteln weisen Koppelmittel U25, U26 auf, die bewirken, dass die Ströme durch die Ausgänge gleich groß sind.

## Patentansprüche

1. Stromversorgungsanordnung, insbesondere zur Versorgung von Silicium-Dünnstäben in einem Reaktor zur Herstellung von Polysilicium nach dem Siemens-Verfahren,
- mit Eingängen (L1, L2, L3) zum Anschluss an ein dreiphasiges Versorgungsnetz,
- mit Ausgängen, die in drei Gruppen (A11-A13, A21-A24, A31-A33) von Ausgängen zum Versorgen von an die Ausgänge anschließbaren Lasten, insbesondere der Silicium-Dünnstäbe gruppiert sind,
- mit drei Gruppen (S1, S2, S3) von Stellmitteln zum Einstellen einer an den Ausgängen anliegenden elektrischen Spannung und
- mit drei Gruppen (U1, U2, U3) von Umschaltmitteln zum Umschalten zwischen einer Parallelschaltung und einer Reihenschaltung der Ausgänge einer der Gruppen (A11-A13, A21-A24, A31-A33) von Ausgängen,
- wobei jede Gruppe (S1, S2, S3) von Stellmitteln wenigstens in einem Zustand der Stromversorgungsanordnung über eine Gruppe von Umschaltmitteln (U1, U2, U3) mit einer Gruppe ( A11-A13, A21-A24, A31-A33) von Ausgängen verbunden ist.

2. Stromversorgungsanordnung nach Anspruch 1 , **dadurch gekennzeichnet, dass** jede Gruppe (S1, S2, S3) von Stellmitteln in einem Zustand der Stromversorgungsanordnung über genau eine Gruppe (U1, U2, U3) von Umschaltmitteln mit genau einer Gruppe (A11-A13, A21-A24, A31-A33) von Ausgängen verbunden ist.

3. Stromversorgungsanordnung nach Anspruch 1 oder 2, **dadurch gekennzeichnet, dass** jede Gruppe (S1, S2, S3) von Stellmitteln über vorzugsweise genau einen Transformator (T1, T2, T3) mit einem Eingang (L1, L2, L3) verbunden ist.

4. Stromversorgungsanordnung nach einem der Ansprüche 1 bis 3, **dadurch gekennzeichnet, dass** wenigstens eine erste Gruppe (A21-A24) von Ausgängen der Gruppen (A11-A13, A21-A24, A31-A33) von Ausgängen drei Ausgänge (A21, A22; A23, A22; A23, A24) hat, die in Parallelschaltung oder in Reihenschaltung betreibbar sind.

5. Stromversorgungsanordnung nach einem der Ansprüche 1 bis 4, **dadurch gekennzeichnet, dass** wenigstens eine zweite Gruppe (A11-A13, A31-A33) von Ausgängen der Gruppen (A11-A13, A21-A24, A31-A33) von Ausgängen zwei Ausgänge (A12, A11; A12, A13 bzw. A32, A31, A32, A33) aufweist, die in Parallelschaltung oder in Reihenschaltung betreibbar sind.

6. Stromversorgungsanordnung nach einem der Ansprüche 3 bis 5, **dadurch gekennzeichnet, dass** die Gruppen (S1, S2, S3) von Stellmitteln mit eingangsseitigen Anschlüssen (S101 bis S104, S201 bis S204, S301 bis S304) mit je einer Anzapfung (T13 bis T14, T21 bis T24, T31 bis T34) einer Sekundärseite des mit der Gruppe (S1, S2, S3) von Stellmitteln verbundenen Transformators (T1, T2, T3) verbunden sind.

7. Stromversorgungsanordnung nach Anspruch 6, **dadurch gekennzeichnet, dass** die Gruppen (S1, S2, S3) von Stellmitteln einen ersten ausgangsseitigen Anschluss (S105, S205, S305) und einen zweiten ausgangsseitigen Anschluss (S106, S206, S306) aufweisen und jeder ausgangsseitige Anschluss (S105, S106, S205, S206, S305, S306) über einen Leistungssteller (S11 bis S17, S21, S27, S31 bis S37) mit wenigsten zwei eingangsseitigen Anschlüssen (S101 bis S104, S201 bis S204, S301 bis S304) verbunden ist.

8. Stromversorgungsanordnung nach Anspruch 7, **dadurch gekennzeichnet, dass** jede Gruppe (U1, U2, U3) von Umschaltmitteln einen eingangsseitigen Anschluss (U101, U201, U301) aufweist, wobei der eingangsseitige Anschluss (U101, U201, U301) mit dem ersten ausgangsseitigen Anschluss (S105, S205, S305) der zugeordneten Gruppe (S1, S2, S3) von Stellmitteln verbunden ist.

9. Stromversorgungsanordnung nach Anspruch 8, **dadurch gekennzeichnet, dass** jede Gruppe (U1, U2, U3) von Umschaltmitteln ausgangsseitige Anschlüsse (U102 bis U104, U202 bis U205, U302 bis U304) aufweist, die mit dem ersten eingangsseitigen Anschluss oder mit einem Rückleiteranschluss (T17, T27, T37) des zugeordneten Transformators (T1, T2, T3) verbunden sind.

10. Stromversorgungsanordnung nach Anspruch 1 1 , **dadurch gekennzeichnet, dass** die zweiten ausgangsseitigen Anschlüsse (S106, S206, S306) der Gruppen (S1, S2, S3) von Stellmitteln, die ausgangsseitigen Anschlüsse (U102 bis U104, U202 bis U205, U302 bis U304) der Gruppen von Umschaltmitteln (U1, U2, U3) und Rückleiteranschlüsse (T17, T27, T37) mit Anschlüssen (A11-A13, A21-A24, A31-A33) der Ausgänge der Gruppen von Ausgängen verbunden sind.

11. Reaktor zur Herstellung von Polysilicium nach dem Siemens-Verfahren, **dadurch gekennzeichnet, dass** der Reaktor eine Stromversorgungsanordnung nach einem der Ansprüche 1 bis 10 und in dem Reaktor angeordnete Silcium-Dünnstäbe (H11 bis H16, H21 bis H26, H31 bis H36) aufweist, die an die Ausgänge der Stromversorgungsanordnung angeschlossen sind.

12. Reaktor nach Anspruch 1 1 , **dadurch gekennzeichnet, dass** an die Ausgänge der ersten Gruppe von Ausgängen jeweils zwei in Reihe geschaltete, eine Last (H21, H22; H23, H24; H25, H26) bildende Silicium-Dünnstabpaare angeschlossen sind und an die Ausgänge der zweiten Gruppen von Ausgängen jeweils drei in Reihe geschaltete, eine Last (H11 bis H13; H14 bis H16; H31 bis H33; H34 bis H36) bildende Silicium-Dünnstabpaare angeschlossen sind.

13. Verfahren zum Betreiben eines Reaktors nach Anspruch 11 und 12, **dadurch gekennzeichnet, dass**
- in einem ersten Schritt die Ausgänge der ersten Gruppe von Ausgängen und die daran angeschlossenen Lasten (H21, H22; H23, H24; H25, H26) in Parallelschaltung mit Spannung versorgt werden während an den Ausgängen der zweiten Gruppe von Ausgängen angeschlossenen Lasten (H11 bis H13; H14 bis H16; H31 bis H33; H34 bis H36) keine Spannung anliegt und
- in einem späteren Schritt die Ausgänge der ersten Gruppe von Ausgängen und die daran angeschlossenen Lasten (H21 bis H26) und die Ausgänge der zweiten Gruppen von Ausgängen und die daran angeschlossenen Lasten (H11 bis H16; H31 bis H36) in Reihenschaltung mit Spannung versorgt werden

14. Verfahren nach Anspruch 13, **dadurch gekennzeichnet, dass** in einem zweiten Schritt vor dem späteren Schritt die Ausgänge der ersten Gruppe von Ausgängen und die daran angeschlossenen Lasten (H21, H22; H23, H24; H25, H26) und die Ausgänge der zweiten Gruppen von Ausgängen und die daran angeschlossenen Lasten (H11 bis H13; H14 bis H16; H31 bis H33; H34 bis H36) in Parallelschaltung mit Spannung versorgt werden.

15. Verfahren nach Anspruch 13 oder 14, **dadurch gekennzeichnet, dass** in einem dritten Schritt vor dem späteren Schritt und nach dem ersten und/oder dem zweiten Schritt entweder die Ausgänge der ersten Gruppe von Ausgängen und die daran angeschlossen Lasten (H11 bis H16; H31 bis H36) oder die Ausgänge der zweiten Gruppen von Ausgängen und die daran angeschlossen Lasten (H11 bis H16; H31 bis H36) in Reihenschaltung mit Spannung versorgt werden während die an die anderen Ausgänge angeschlossenen Lasten in Parallelschaltung mit Spannung versorgt werden.
